# EUROPÄISCHE PATENTANMELDUNG

(11) **EP 1 905 806 A1**
(43) Veröffentlichungstag der Anmeldung: **02.04.2008**
(21) Anmeldenummer: 06121546.3
(22) Anmeldetag: 29.09.2006
(51) Int. Cl.: C09J 7/02, G09F 3/10

(54) **Verwendung von wasserlöslichem Polyvinylalkohol als Klebstoff für Kunststoffetiketten**

(71) Anmelder: Kuraray Europe GmbH, 65926 Frankfurt am Main (DE)
(72) Erfinder: Frank, Michael, Dr., Lion-Feuchtwanger-Strasse 25 55129,Mainz (DE); Fuss, Robert, Dr., 65825, Liederbach (DE); Pilgrim, Axel, Dr., 60326, Frankfurt (DE)
(74) Vertreter: Kisters, Michael Marcus

(57) **Zusammenfassung**

Die Erfindung betrifft ein Verfahren zum Aufkleben von Kunststoffetiketten auf Kunststoffgegenständen durch ausschließliche Verwendung von Polyvinylalkohol als Kleber, wobei die Kunststoffetiketten nicht überlappend verklebt sind.

Weiterhin betrifft die Erfindung ein Verfahren zum Recyceln von Kunststoffgegenständen, die mit Polyvinylalkohol verklebten Etiketten aufweisen.

## Beschreibung

Die vorliegende Erfindung betrifft ein Verfahren zur Verklebung von Kunststoffetiketten auf Kunststoffgegenständen unter Verwendung von Polyvinylalkohol und ein Verfahren zum Recyceln dieser etikettierten Kunststoffgegenstände.

### Technisches Gebiet

Auf Grund des niedrigen Gewichts werden zunehmend Kunststoffverpackungen als Flüssigkeitsbehälter, insbesondere als Getränkeverpackungen eingesetzt. Diese Behälter werden wiederum zunehmend mit Kunststoffetiketten versehen, wobei die Kunststoffetiketten meist bedruckt und/oder aus einem anderen Kunststoff als dem der Behälter hergestellt sind. Dies erschwert das Recycling, da hier möglichst farblose und sortenreine Kunststoffe gewonnen werden sollen. Ein weiteres Problem beim Recycling von etikettierten Kunststoffbehältern im Lebensmittelbereich ist die Verwendung von Klebstoffen, die sich nicht oder nur schwer von den Behältern ablösen lassen und das recycelte Gut verunreinigen.

Zur Verklebung von Kunststoffetiketten auf Kunststoffbehältern werden häufig Polyvinylalkohole, Polyvinylacetate, Stärke oder Zellulose eingesetzt. Diese Klebstoffe werden meist in wässriger Lösung auf das Etikett aufgetragen und anschließend mit dem Kunststoffgegenstand verklebt. Zur Verklebung ist es notwendig, dass die Klebstoffe trocknen, d.h. das Wasser aus der Klebeschicht muss entfernt werden. Dieses ist durch die wasserunlöslichen bzw. für Wasserdampf undurchlässigen Kunststoffschichten (Behälter und Etikett) nicht möglich, sondern kann nur über die offenen Seiten der Verklebung erfolgen.

Die sich hieraus ergebende Anbindezeit oder geschlossene Wartezeit des Klebers bezeichnet die Zeitspanne zwischen dem Fügen einer Fügeteilanordnung und dem Beginn der Anwendung von Wärme und/oder Druck zum Abbinden oder Vernetzen einer Klebung.

Mit TACK wird nach DIN EN 923 die Eigenschaft eines Stoffes, die ihn befähigt, unmittelbar beim Berühren einer anderen Oberfläche, welche ein Fügeteil oder eine andere Klebstoffschicht sein kann, eine Verbindung zu bilden, bezeichnet.

Aus DE 196 34 022 C2 ist für die Verklebung von "wrap-around"-Kunststoffetiketten auf Kunststoffbehältern die Verwendung von Polyvinylalkoholen bekannt. Die hier offenbarten Etiketten werden überlappend verklebt, wobei die Ränder der Etiketten im Überlappungsbereich miteinander verklebt oder versiegelt sind. Für das Verkleben oder Versiegeln wird kein wasseraktivierbarer Klebstoff und damit kein Polyvinylalkohol verwendet.

Verklebungen dieser Art ermöglichen die trockene Entetikettierung, wobei das Etikett im trockenen Zustand vom Kunststoffbehälter mechanisch abgezogen wird. Die für die Verklebung oder Versiegelung im Überlappungsbereich verwendeten, wasserunlöslichen Kleber stellen ein Problem beim Recycling solcher Behälter dar, da Klebereste auf dem Behälter verbleiben können. Zudem ist die Trockenentetikettierung nur schlecht zu automatisieren.

Vorteilhaft wäre es, die Etiketten mit einem wässrigen Medium zu entfernen, in dem sich der Klebstoff rückstandsfrei auflöst. Dies ist mit den in DE 196 34 022 C2 genannten Verklebesystemen auf Grund des versiegelten Überlappungsbereichs der Etiketten nicht möglich. Zudem weisen die als Kleber offenbarten Polyvinylalkohole einen hohen Hydrolysegrad auf. Diese Polyvinylalkohole besitzen keine oder nur eine geringe Haftung an den üblicherweise eingesetzten Polyolefinetiketten. Im vorliegenden Fall der überlappend versiegelten Etiketten und der Trockenentetikettierung stellt diese kein Problem dar. Für ein auf Wasser basierendes Recycling sind solche Systeme nicht einsetzbar.

### Aufgabe

Aufgabe der vorliegenden Erfindung ist es, Klebstoffe für die Verklebung von Kunststoffetiketten auf Kunststoffbehältern bereit zu stellen, die einerseits eine hohe Klebekraft für Etiketten ohne Versiegelung oder Verklebung eines Überlappungsbereichs besitzen und gleichzeitig ein für das ein auf Wasser basierendes Recycling der Kunststoffe ausreichende Wasserlöslichkeit besitzen.

Überraschenderweise wurde gefunden, dass Polyvinylalkohol als Klebstoff für Kunststoffetiketten auf Kunststoffgegenständen geeignet ist, die keine Versiegelung oder Verklebung im Überlappungsbereich besitzen. Verklebungen dieser Art sind zudem für einen wasserbasierenden Recyclingprozess geeignet.

### Darstellung der Erfindung

Gegenstand der vorliegenden Erfindung ist daher ein Verfahren zum Aufkleben von Kunststoffetiketten auf Kunststoffgegenständen durch Aufbringen einer Schicht aus Polyvinylalkohol auf eine Seite des Kunststoffetiketts, Anlösen der Schicht mit Wasser und in Kontakt bringen des Kunststoffetiketts mit der Seite, die den Polyvinylalkohol aufweist mit dem Kunststoffgegenstand, wobei die Kunststoffetiketten nicht überlappend verklebt sind und als Kleber ausschließlich Polyvinylalkohol eingesetzt wird.

Als Klebstoffe für das erfindungsgemäße Verfahren besonders geeignete Polyvinylalkohole besitzen einen Verseifungsgrad (Hydrolysegrad) von 30 bis 72 Mol.%, bevorzugt 40 bis 70 Mol.%, insbesondere 40 bis 65 Mol.% und/oder eine Viskosität von 2 bis 10 mPa.s bevorzugt 3 bis 7 mPa.s (nach Hoeppler mit 4 Gew. % wässrige Lösung bei 20°C). Im Rahmen der vorliegenden Erfindung sind die Begriffe Hydrolysegrad, Verseifungsgrad oder Vinylalkoholgehalt synonym und bezeichnen den Mol.%-Anteil von Vinylalkoholeinheiten in Bezug zum Anteil der Vinylacetatgruppen im Polyvinylalkohol.

Als Kunststoffgegenstände werden bevorzugt Flüssigkeitsbehälter, ganz besonders bevorzugt Flüssigkeitsbehälter im Lebensmittelbereich, wie z.B. Trinkflaschen eingesetzt. Diese können aus Materialien der Gruppe Polyethylenterephthalat (PET), Polyethylen (PE), Polypropylen (PP), orientiertes Polypropylen (OPP) oder Polycarbonat (PC) als Mono- oder Copolymer oder aus Mischungen dieser Polymere bestehen.

Kunststoffetiketten werden häufig aus Polyethylen und/oder Polypropylen-Folien hergestellt und können ein- oder beidseitig bedruckt sein. Etiketten dieser Art werden industriell als Rollenware geliefert und besitzen entweder zwischen den einzelnen Etiketten eine Perforation oder müssen entsprechend vor dem Etikettieren abgelängt werden.

Der als Kleber eingesetzte Polyvinylalkohol muss den folgenden Ansprüchen genügen:
1. ausreichende Haftung auf den Kunststoffoberflächen. Dies wird durch einen möglichst hohen Anteil an Restacetatgruppen bzw. einen niedrigen Hydrolysegrad erreicht.
2. gute Wasserlöslichkeit, d.h. der Restacetatgehalt darf nicht zu hoch sein.
3. niedrige Viskosität, um ein einfaches Auftragen zu ermöglichen. Dies kann durch einen niedrigen Polymerisationsgrad erreicht werden.

Erfindungsgemäß verwendete Polyvinylalkohole weisen daher bevorzugt die genannten Hydrolysegrade bzw. Viskositäten auf. Der Restacetatgehalt kann direkt über den Hydrolysegrad bestimmt werden. Bevorzugt weisen die erfindungsgemäß verwendeten Polyvinylalkohole einen Polymerisationsgrad von 50 bis 500, insbesondere 50 bis 250 auf.

Eine Verfahrensvariante der vorliegenden Erfindung ist ein Verfahren zur Etikettierung von Kunststoffgegenständen mit Kunststoffetiketten, bei dem auf die Kunststoffetiketten einseitig eine Schicht aus Polyvinylalkohol aufextrudiert, diese Schicht mit Wasser angelöst und das Etikett auf dem Kunststoffgegenstand aufgebracht wird.

Durch die erfindungsgemäße Aufextrusion des Klebstoffs kann dieser in der geringstmöglichen Dicke aufgetragen werden. Die Dicke der trockenen Schicht beträgt bevorzugt 1 bis 50 µm, insbesondere 1 bis 30 µm oder 10 bis 20 µm.

Es ist auch möglich, die genannten Polyvinylalkohole in wässriger Form auf das Kunststoffetikett aufzutragen. Eine weitere Variante der vorliegenden Erfindung ist daher ein Verfahren zum Etikettieren von Kunststoffgegenständen mit Kunststoffetiketten, wobei auf die Schicht aus Polyvinylalkohol aus wässriger Lösung aufgebracht und getrocknet, diese Schicht mit Wasser angelöst und das Etikett auf dem Kunststoffgegenstand aufgebracht wird. Die getrocknete Schicht aus Polyvinylalkohol weist bevorzugt eine Dicke von 1 bis 50 µm, insbesondere 1 bis 20 µm auf.

Zur Verklebung mit dem Kunststoffbehälter muss die Polyvinylalkoholschicht in beiden Verfahrensvarianten auf dem Kunststoffetikett geringfügig mit Wasser angelöst werden. Hierzu bietet sich der Einsatz eines Aerosols aus Wasser oder auf Wasserbasis an, dem ggf. Additive wie Tenside oder Alkohole beigegeben werden können. Unter dem Anlösen der Polyvinylalkohol-Schicht wird das vollständige Benetzen der Schicht mit Feuchtigkeit verstanden. Durch das Benetzen mit Wasser wird die Polyvinylalkoholschicht klebrig und das Etikett kann auf den Kunststoffgegenstand aufgebracht werden.

Die Verwendung von Polyvinylalkoholen mit den genannten Hydrolysegraden zur Verklebung von Kunststoffetiketten auf Kunststoffgegenständen besitzt insbesondere Vorteile beim Recycling der Kunststoffgegenstände. Hier ist es erforderlich, Etiketten und Kunststoffgegenstände sortenrein und rückstandsfrei voneinander zu trennen. Im vorliegenden Fall bedeutet dies, dass sich der Kleber möglichst gut und rückstandsfrei zumindest vom Kunststoffgegenstand abtrennen lassen muss. Dies wird durch die ausschließliche Verwendung von Polyvinylalkohol als Kleber und dessen gute Wasserlöslichkeit ermöglicht.

Weiterer Gegenstand der vorliegenden Erfindung ist daher ein Verfahren zum Recyceln von Kunststoff aus Kunststoffgegenständen, die mit Polyvinylalkohol aufgeklebte Kunststoffetiketten aufweisen, wobei die etikettierten Kunststoffgegenstände zerkleinert und in einem wässrigen Medium aufgeschlämmt werden, wodurch sich der Polyvinylalkohol löst und die zerkleinerten Kunststoffgegenstände von den zerkleinerten Kunststoffetiketten abgetrennt werden.
Das erfindungsgemäße Verfahren wird bevorzugt in Float-Anlagen durchgeführt, bei der sich die schwereren Kunststoffschnitzel aus den Kunststoffgegenständen auf dem Boden absetzen, während die leichteren Kunststoffetiketten auf der Flüssigkeitsoberfläche aufschwimmen. Verfahren dieser Art sind dem Fachmann bekannt und können im großen Maßstab kontinuierlich durchgeführt werden. Als wässriges Medium kann reines Wasser, Wasser-Alkohol-Mischungen oder Wasser mit einem Zusatz an Tensiden verwendet werden.

### Bestimmungsmethoden

### a) Bestimmung des Vinylacetatgehalts

Unter dem Vinylacetatgehalt wird der gewichtsprozentige Anteil an Acetylgruppen verstanden, der sich aus dem Verbrauch der für die Verseifung von 1 g Substanz notwendigen Menge Kalilauge ergibt.
Bestimmungsmethode (in Anlehnung an EN ISO 3681):
Etwa 2 g der zu untersuchenden Substanz werden in einem 500 ml Rundkolben auf 1 mg genau eingewogen und mit 90 ml Ethanol und 10 ml Benzylalkohol am Rückfluss gelöst. Nach dem Abkühlen wird die Lösung mit 0,01 n NaOH gegen Phenolphthalein neutral gestellt. Anschließend werden 25,0 ml 0,1 n KOH zugegeben und 1,5 Stunden am Rückfluss erhitzt. Man lässt den Kolben verschlossen abkühlen und titriert den Laugenüberschuss mit 0,1 n Salzsäure gegen Phenolphthalein als Indikator bis zur bleibenden Entfärbung zurück. In gleicher Weise wird eine Blindprobe behandelt. Der PV-Acetatgehalt berechnet sich wie folgt: PV-Acetatgehalt [%] = (b-a)*86/E, mit a = Verbrauch an 0,1 n KOH für Probe in ml, b = Verbrauch an 0,1 n KOH für Blindversuch in ml und E = Einwaage der zu untersuchenden Substanz trocken in g.

### b) Bestimmung des Vinylalkoholgruppengehalts

Der Vinylalkoholgruppengehalt (Polyvinylalkoholgehalt) wird durch Rückrechnung des aus a) bestimmten Vinylacetatgehalts auf 100% ermittelt.

### c) Bestimmung der Viskosität

Die Viskosität der verwendeten Polyvinylalkohole wird gemäß DIN 53015 an einer 4 %-igen Lösung in Wasser bei 20 °C im Hoeppler-Viskosimeter bestimmt.

### Beispiele

### Beispiel 1

Eine OPP-Folie (GND 40, Firma Treofan) wurde mit einer 8 - 10%igen wässrigen Lösung eines Polyvinylalkohols, der einen Verseifungsgrad von 65 mol% und eine Auslaufzeit von 16 sec im "Ford 4 Becher" gemäß DIN ISO 2431 (01/2000) und eine Viskosität nach Hoeppler als 4%ige Lösung bei 20°C ca. 5 mPas aufwies, beschichtet und anschließend bei 80 - 90°C getrocknet. Die erhaltene Beschichtung weist eine Trockenschichtstärke von 4 - 6 µm auf.

### Beispiel 2

In Analogie zu Beispiel 1 wird eine OPP-Folie (GND 40) mit einer 8 -10%igen wässrigen Lösung bzw. Dispersion eines Polyvinylalkohols, der einen Verseifungsgrad von 70 mol% und eine Auslaufzeit von 16 sec im "Ford 4 Becher" gemäß DIN ISO 2431 (01/2000) und eine Viskosität nach Hoeppler als 4%ige Lösung bei 20°C ca. 5 mPas aufwies, beschichtet. Nach der Trocknung bei 80 - 90°C erhält man eine Beschichtung mit einer Trockenschichtstärke von 4 - 6 µm.

### Vergleichsbeispiel 1

Eine OPP-Folie (GND 40 - Firma Treofan) wurde mit einer 8 - 10%igen Lösung eines Polyvinylalkohols, der einen Verseifungsgrad von 73 mol% und eine Auslaufzeit von 16 sec im "Ford 4 Becher" gemäß DIN ISO 2431 (01/2000) und eine Viskosität nach Hoeppler als 4%ige Lösung bei 20°C ca. 5 mPas aufwies, beschichtet und anschließend bei 80 - 90°C getrocknet. Die erhaltene Beschichtung weist eine Trockenschichtstärke von 4 - 6 µm auf.

### Vergleichsbeispiel 2

Eine OPP-Folie (GND 40 - Firma Treofan) wurde mit einer 8 - 10%igen Lösung eines Polyvinylalkohols, der einen Verseifungsgrad von 78 mol% und eine Auslaufzeit von 16 sec im "Ford 4 Becher" gemäß DIN ISO 2431 (01/2000) und eine Viskosität nach Hoeppler als 4%ige Lösung bei 20°C ca. 5 mPas aufwies, beschichtet und anschließend bei 80 - 90°C getrocknet. Die erhaltene Beschichtung weist eine Trockenschichtstärke von 4 - 6 µm auf.

### Herstellung von Verklebungen von Kunststoffetiketten auf Kunststoffgegenständen

Die einseitig mit PVOH beschichtete OPP Folie wird mit einem rein wäßrigen Sprühnebel reaktiviert dh. Angefeuchtet oder angelöst. Die Folie wird auf eine PET Flasche (0.75 L) geklebt und bei Raumtemperatur getrocknet.

### Ausprüfung der Kunststoffverklebungen hinsichtlich Klebevermögens

Nach 24 h Trocknen bei RT wurden die mit Kunststoffetiketten (OPP) beschichteten PET Flaschen in ein temperiertes Wasserbad (40°C) plaziert, so daß die Etiketten vollständig benetzt sind. Alle 15 Minuten wurden die Flaschen einer gleichmäßigen Drehbewegung (Rotation um die eigene Achse) ausgesetzt. Es wurde dann die Zeit ermittelt, bis die Etiketten vollständig abgelöst waren. Die Ergebnisse finden sich in der nachfolgenden Tabelle.

| | ermittelte Klebezeit (40°C) |
|---|---|
| Beispiel 1 | 7 h |
| Beispiel 2 | 6 h 30 Minuten |
| Vergleichsbeispiel 1 | 4 h 45 Minuten |
| Vergleichsbeispiel 2 | 4 h |

## Patentansprüche

1. Verfahren zum Aufkleben von Kunststoffetiketten auf Kunststoffgegenständen durch Aufbringen einer Schicht aus Polyvinylalkohol auf eine Seite des Kunststoffetiketts, Anlösen der Schicht mit Wasser und in Kontakt bringen des Kunststoffetiketts mit der den Polyvinylalkohol aufweisenden Seite mit dem Kunststoffgegenstand, **dadurch gekennzeichnet, dass** die Kunststoffetiketten nicht überlappend verklebt sind und als Kleber ausschließlich Polyvinylalkohol eingesetzt wird.

2. Verfahren nach Anspruch 1 **dadurch gekennzeichnet, dass** die Kunststoffgegenstände Flüssigkeitsbehälter oder Trinkflaschen aus PET, PE, PC, OPP oder PP als Mono- oder Copolymer oder als Mischung dieser Polymere sind.

3. Verfahren nach Anspruch 1 oder 2 **dadurch gekennzeichnet, dass** Polyvinylalkohol mit einem Hydrolysegrad von 30 bis 72 Mol. % eingesetzt wird.

4. Verfahren nach einem der Ansprüche 1 bis 3, **dadurch gekennzeichnet, dass** die Schicht aus Polyvinylalkohol durch Extrusion auf eine Seite des Kunststoffetiketts aufgebracht wird.

5. Verfahren nach einem der Ansprüche 1 bis 3, **dadurch gekennzeichnet, dass** die Schicht aus Polyvinylalkohol aus wässriger Lösung mit anschließender Trocknung auf eine Seite des Kunststoffetiketts aufgebracht wird.

6. Verfahren nach einem der Ansprüche 1 bis 5, **dadurch gekennzeichnet, dass** die Polyvinylalkohol-Schicht auf dem Kunststoffetikett mit einem Wasser-Aerosol angelöst wird.

7. Verfahren nach einem der Ansprüche 1 bis 6, **dadurch gekennzeichnet, dass** die trockene Polyvinylalkohol-Schicht auf dem Kunststoffetikett vor dem Verkleben eine Dicke von 1 bis 50 µm aufweist.

8. Verfahren zum Recyceln von Kunststoff aus Kunststoffgegenständen, die mit Polyvinylalkohol aufgeklebte Kunststoffetiketten aufweisen, **dadurch gekennzeichnet, dass** die etikettierten Kunststoffgegenstände zerkleinert und in einem wässrigen Medium aufgeschlämmt werden, wobei sich der Polyvinylalkohol löst und die zerkleinerten Kunststoffgegenstände von den zerkleinerten Kunststoffetiketten abgetrennt werden.

9. Verfahren nach Anspruch 8 **dadurch gekennzeichnet, dass** die die Kunststoffgegenstände Flüssigkeitsbehälter oder Trinkflaschen aus PET, PE, PC oder PP sind.

10. Verfahren nach Anspruch 8 oder 9 **dadurch gekennzeichnet, dass** der Polyvinylalkohol einen Hydrolysegrad von 30 bis 72 Mol. % aufweist.
